(19) Europäisches Patentamt

European Patent Office

Office européen des brevets

(11) EP 1 500 905 A2

(12) **EUROPEAN PATENT APPLICATION**

(43) Date of publication:
26.01.2005 Bulletin 2005/04

(51) Int Cl.$^7$: **G01C 17/28**

(21) Application number: 04254254.8

(22) Date of filing: 15.07.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 23.07.2003 JP 2003200603

(71) Applicant: **ALPS ELECTRIC CO., LTD.**
**Ota-ku Tokyo 145 (JP)**

(72) Inventor: **Sasagawa, Shinichi,**
**c/o Alps Electric Co. Ltd.**
**Tokyo (JP)**

(74) Representative: **Kensett, John Hinton**
**Saunders & Dolleymore,**
**9 Rickmansworth Road**
**Watford, Hertfordshire WD18 0JU (GB)**

(54) **Magnetic compass**

(57) A small magnetic compass capable of suppressing the effects from the magnetic dip is provided. The magnetic compass includes a substrate 11, a two-axis sensor 12 arranged on the substrate 11, for detecting external magnetic fields, a magnetic north calculating device 13 for detecting an azimuth from outputs of the respective magnetic sensors, a rotating magnetic field generating device 14 for generating a rotating magnetic field on the plane of the substrate using a reference point P1 as a center of rotation.

*FIG. 1*

**Description**

BACKGROUND OF THE INVENTION

1. Field of the Invention

The present invention relates to a magnetic compass for measuring the azimuth of a line of magnetic force generated by earth magnetism.

2. Description of the Related Art

A magnetic compass capable of measuring the azimuth of a line of magnetic force generated by an external magnetic field such as earth magnetism is widely used as a means for detecting the position of a vehicle, such as a vehicle-mounted compass and a navigation system.

Such a magnetic compass is a device capable of detecting magnetism in two directions such as the X and Y directions orthogonal to each other on a plane using a magnetic sensor such as a flux gate, a Hall element, a GMR (giant magnetic reluctance) element, and an MI(magnetic impedance) element. The horizontal component of the earth magnetism is detected by sensors of the X and Y axes to thus calculate the direction of the magnetic north from the magnitude of the detected horizontal component.

According to a method of measuring the direction of the magnetic north, the strength of the earth magnetism in accordance with an angle is measured in a state where the magnetic compass is previously made horizontal and is stored in a memory, and the measured data is compared with the magnitude of the horizontal component detected by the sensors so that the corresponding angle is determined as the magnetic north. Therefore, when the sensors are not kept horizontal during the measurement, the magnitude of the horizontal component detected by the sensors changes due to the influence of the magnetic dip, such that it is difficult to calculate a correct direction.

In order to solve the above-mentioned problem, a method of loading the magnetic sensors on a gimbal to thus keep the magnetic sensors horizontal and a method of keeping the magnetic sensors horizontal to thus measure the strength of the earth magnetism together with a level, are used. A method of arranging two magnetic sensors so as to be orthogonal to each other, and detecting the orientation of the sensors with respect to the earth magnetism in three dimension, by combining the two magnetic sensors with a sensor that detects a horizontal plane or a perpendicular plane, and calculating the horizontal component to obtain the azimuth, are utilized (for example, refer to the patent document 1).

[Patent Document 1]

Japanese Unexamined Patent Application Publication No. 11-211474 (pages 4-7, Fig. 1)

However, the conventional magnetic compass has the following problems. That is, according to the conventional magnetic compass, in order to accurately calculate the direction of the magnetic north, it is necessary to make the sensors horizontal in measuring the strength of the earth magnetism and to increase the number of sensors, which results in complicated operations. Therefore, for example, when a magnetic compass is attached to a portable terminal device, since it is difficult to keep the sensors horizontal, the accuracy in which the direction of the magnetic north is calculated decreases or it is necessary to introduce a complicated system for accurately calculating the magnetic north.

SUMMARY OF THE INVENTION

Accordingly, the present invention is contrived to solve the above-mentioned problems, and it is an object of the present invention to provide a small magnetic compass having a simple structure, which is capable of suppressing the effects from the magnetic dip to accurately measure an azimuth.

A magnetic compass according to the present invention comprises a base material, a plurality of magnetic sensors arranged on the base material, the magnetic sensors for detecting external magnetic fields, an azimuth detecting device for detecting an azimuth from the outputs of the magnetic sensors, and a rotating magnetic field generating device for generating a rotating magnetic field on a plane having a reference point using the reference point separated from the plurality of magnetic sensors of the base material as a center of rotation.

According to the magnetic compass, the rotating magnetic field is applied to the plane having the reference point by the rotating magnetic field generating device. The composite magnetic field between the rotating magnetic field and the earth magnetism is detected by the plurality of magnetic sensors. The azimuth measuring device calculates an angle at which the magnitude of a magnetic vector calculated from the detection result of the plurality of magnetic sensors is maximal as the magnetic north. When the plane having the reference point is inclined with respect to the horizontal plane, a composite magnetic field between the rotating magnetic field and the plane component of the earth magnetism is detected. Therefore, even when the magnetic sensors are inclined with respect to the horizontal plane, it is possible to obtain an angle at which the magnitude of a magnetic vector is maximal. Thus, it is possible to be free from being affected by the magnetic dip or changes in measuring environments. Also, it is not necessary to previously perform correction on the horizontal plane. Thus, it is possible to improve the operation property. Further, it is not necessary to provide a special device for offsetting the effects from magnetic dip. As a result, it is possible to simplify the system to reduce the manufacturing cost.

The base material is preferably a substrate, and the magnetic sensors are preferably formed on one surface of the substrate. The rotating magnetic field generating device preferably generates a rotating magnetic field having a uniform strength along one surface of the substrate.

According to the magnetic compass, as mentioned above, it is possible to be free from being affected by the magnetic dip or changes in the measurement environments and to simplify the structure of the system.

According to the magnetic compass of the present invention, the rotating magnetic field generating device preferably comprises a plurality of coils, and a magnetic field controlling portion for generating a phase difference with respect to the plurality of coils to generate a magnetic field.

According to the magnetic compass, the magnetic field controlling portion appropriately provides the phase difference with respect to the plurality of coils to thus generate the magnetic field. Therefore, it is possible to generate a rotating magnetic field having a uniform strength using the reference point as the center of rotation.

According to the magnetic compass of the present invention, the rotating magnetic field generating device preferably comprises a permanent magnet whose magnetic poles are arranged from the reference point toward a radial direction on the plane having the reference point and a rotation driving portion for rotating the permanent magnet, using the reference point as a center of rotation, along the plane including the reference point.

According to the magnetic compass, the permanent magnet whose magnetic poles are arranged from the reference point toward the radial direction, rotates by using the reference point as the center of rotation to thus generate the rotating magnetic field.

BRIEF DESCRIPTION OF THE DRAWINGS

Fig. 1 is a schematic plan view illustrating a magnetic compass according to a first embodiment of the present invention;

Fig. 2 is a perspective view illustrating a two-axis sensor according to the first embodiment of the present invention;

Fig. 3 is a graph illustrating the size of a magnetic field with respect to an angle of rotation when the direction of the magnetic north is 30° according to the first embodiment of the present invention;

Fig. 4 is a graph illustrating the size of a magnetic field with respect to an angle of rotation when the direction of the magnetic north is 120° according to the first embodiment of the present invention;

Fig. 5 is a graph illustrating the size of a magnetic field with respect to an angle of rotation when the direction of the magnetic north is 210° according to the first embodiment of the present invention;

Fig. 6 is a graph illustrating the size of a magnetic field with respect to an angle of rotation when the direction of the magnetic north is 30° and the magnetic dip is 30° according to the first embodiment of the present invention;

Fig. 7 is a block diagram illustrating a magnetic compass according to a second embodiment of the present invention; and

Fig. 8 is a plan view illustrating another form of the magnetic compass according to the second embodiment of the present invention.

DESCRIPTION OF THE PREFERRED EMBODIMENTS

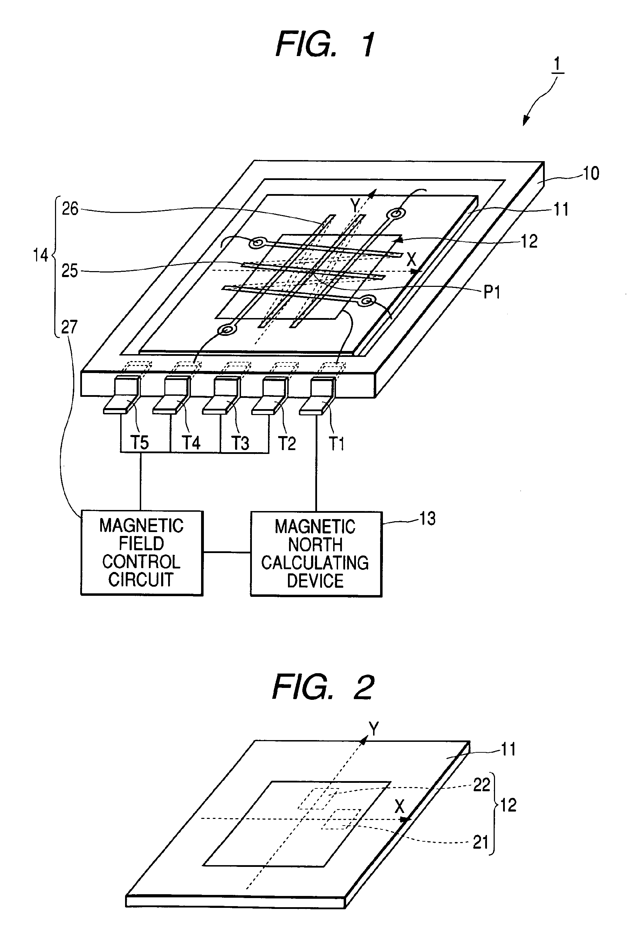

A first embodiment of a magnetic compass according to the present invention will now be described with reference to Figs. 1 to 6.

As illustrated in Fig. 1, a magnetic compass 1 according to the present embodiment includes a package 10, a substrate (a base material) 11 accommodated in the package 10, a two-axis sensor 12 for, when the X and Y axes are orthogonal to each other on the substrate 11, detecting the magnetic fields of the respective axes, a magnetic north calculating device (an azimuth measuring device) 13 that is an electronic circuit for calculating the direction of the magnetic north based on the magnetic fields detected by the two-axis sensor 12, and a rotating magnetic field generating device 14 for generating a rotating magnetic field having a uniform strength using the reference point P1 that is the intersection between the two axes as a rotating center.

As illustrated in Fig. 2, the two-axis sensor 12 includes an X axis magnetic sensor 21 composed of a Hall element, for detecting the magnetic field on the X axis, and a Y axis magnetic sensor 22 for detecting the magnetic field on the Y axis and is formed on one surface of the substrate 11 by a thin film forming technology.

The two-axis sensor 12 is connected to a terminal T1 formed on the side surface of the package 10 by wire bonding and is electrically connected to the magnetic north calculating device 13 provided outside the package 10.

The rotating magnetic field generating device 14 includes an X axis coil 25 wound in the direction of the X axis and a Y axis coil 26 wound in the direction of the Y axis on the substrate 11, and a magnetic field control circuit 27 that is an electronic circuit provided outside the package 10, for controlling current to generate a magnetic field in each coil.

The respective coils are made of conductive patterns formed on one surface of the substrate 11 so as to be laminated on the top and bottom surfaces of the two-axis sensor 12 by forming a thin film as described above.

Insulating layers (not shown) are provided between the respective coils so that the coils are not electrically connected to each other.

The respective coils may be formed by electrically connecting the conductive patterns formed on the other surface of the substrate 11 and on the surface of the two-axis sensor 12 to through holes of the substrate 11, in which conductors such as solder are buried.

The end points of the respective coils are connected to terminals T2 to t4 formed on the side of the package 10 by wire bonding and are connected to the magnetic field control circuit 27 provided outside the package 10.

Next, a method of measuring the magnetic north using a magnetic compass 1 according to the present embodiment will be described.

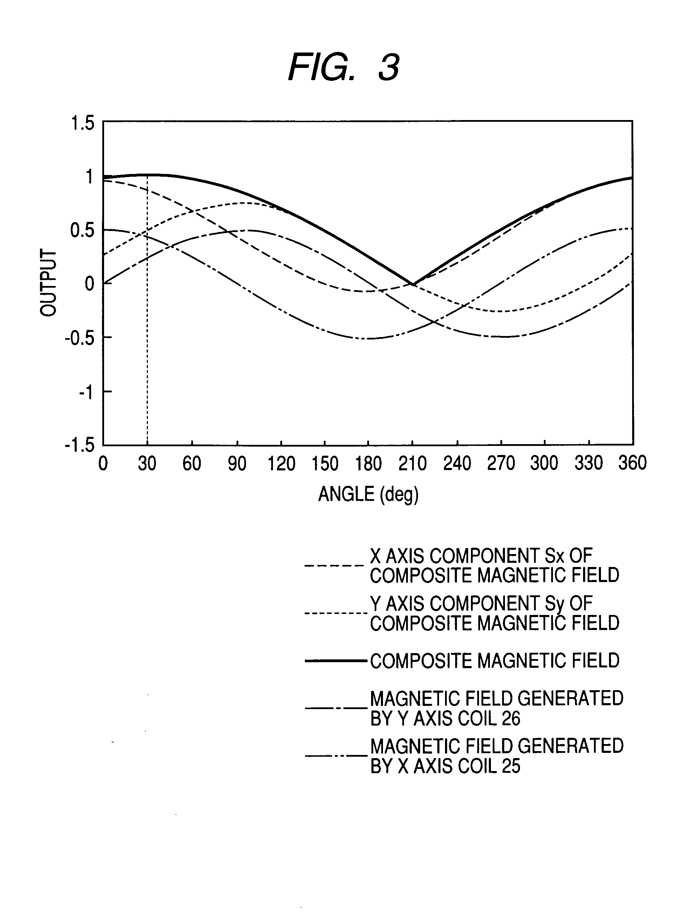

According to the present embodiment, the positive direction of the X axis is 0° and an angle of rotation increases in a clockwise direction. First, the magnetic field control circuit 27 controls current so that the X axis coil 25 and the Y axis coil 26 generate a magnetic field that sinusoidally changes as illustrated in Fig. 3 with respect to the angle of rotation. At this time, the current having a phase difference of 90° with respect to the Y axis coil 26 flows to the X axis coil 25. Therefore, the magnetic field is rotated no the plane of the substrate 11 using the reference point P1 as a center of rotation to generate a rotating magnetic field having a uniform strength. The two-axis sensor 12 detects a composite magnetic field between the rotating magnetic field and the earth magnetism.

When the angle of the earth magnetism with respect to the Y axis, that is, the direction of the magnetic north is $\theta_0$, the strength of the earth magnetism is A, the angle of the rotating magnetic field generated by the rotating magnetic field generating device 14 with respect to the Y axis is $\theta_1$, the strength of the rotating magnetic field is B, the strength of the composite magnetic field is C, the X axis component of the composite magnetic field is $S_x$, and the Y axis component of the composite magnetic field is $S_y$, the following equations (1), (2), and (3) are established.

[Equation 1]

$$S_x = A \times \cos\theta_0 + B \times \cos\theta_1 \tag{1}$$

[Equation 2]

$$S_y = A \times \sin\theta_0 + B \times \sin\theta_1 \tag{2}$$

[Equation 3]

$$C = \sqrt{S_x{}^2 + S_y{}^2}$$
$$= \sqrt{(A \times \cos\theta_0 + B \times \cos\theta_1)^2 + (A \times \sin\theta_0 + B \times \sin\theta_1)^2} \tag{3}$$

When the direction $\theta_0$ of the magnetic north is 30°, the strength A of the earth magnetism is 0.5, and the strength B of the rotating magnetic field is 0.5, it is noted from the equations (1) and (2) that the X axis component $S_x$ and the Y axis component $S_y$ of the composite magnetic field are as illustrated in Fig. 3.

When outputs detected by the X axis magnetic sensor 21 and the Y axis magnetic sensor 22 are the same as the X axis component $S_x$ and the Y axis component $S_y$ of each composite magnetic field, the magnetic north calculating device 13 obtains the values illustrated in Fig. 3 with respect to the angle of the rotating magnetic field by performing the calculation of the equation (3).

The magnetic north calculating device 13 obtains the angle at which the strength of the composite magnetic field is maximal from the calculation result to thus calculate 30° as the direction of the magnetic north.

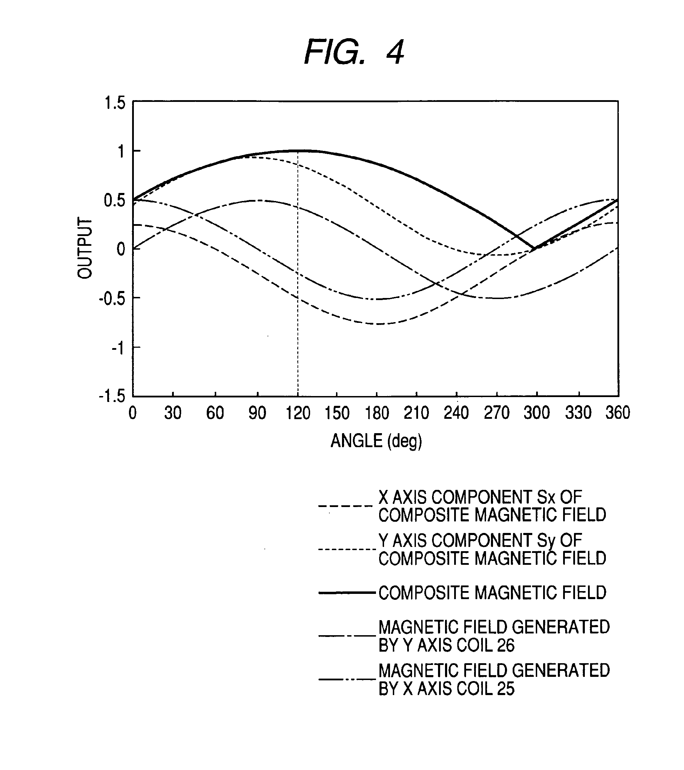

Next, when the direction of the magnetic north $\theta_0$ is 120°, as mentioned above, the X axis component $S_x$ and the Y axis component $S_y$ of the composite magnetic field and the strength of the composite magnetic field become the amounts of the detected magnetic field as illustrated in Fig. 4 with respect to the angle of the rotating magnetic field. The magnetic calculating device 15 obtains the angle at which the strength of the composite magnetic field is maximal to thus calculate 120° as the direction of the magnetic north.

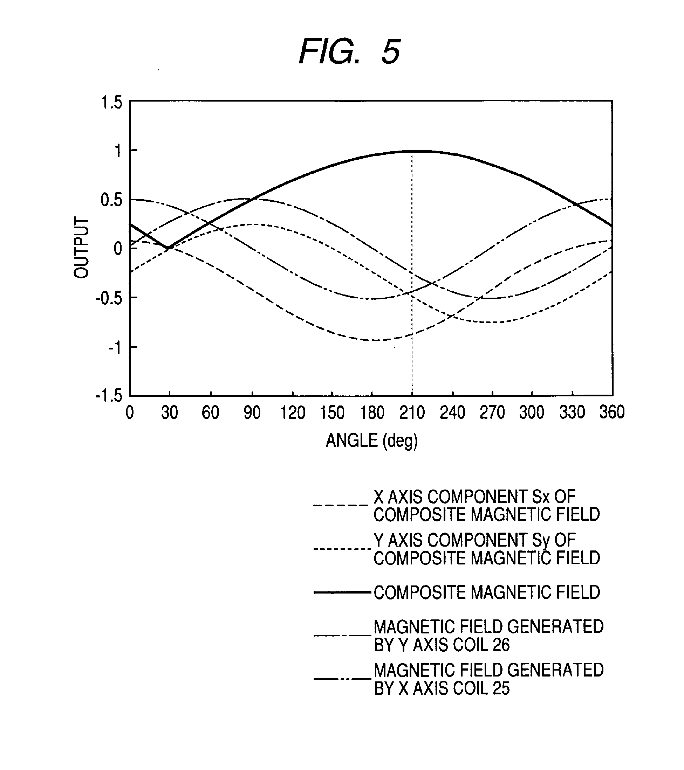

When the direction of the magnetic north $\theta_0$ is 210°, as mentioned above, the X axis component $S_x$ and the Y axis component $S_y$ of the composite magnetic field and the strength of the composite magnetic field become the amounts of the detected magnetic field as illustrated in Fig. 5 with respect to the angle of the rotating magnetic field. The magnetic calculating device 15 obtains the angle at which the strength of the composite magnetic field is maximal to thus calculate 210° as the direction of the magnetic north.

Next, the case in which the direction of the magnetic north is calculated in a state where the substrate 11 is inclined with respect to the horizontal plane.

When the magnetic dip of the substrate 11 is $\alpha$, the strength of the earth magnetism that can be detected by the respective sensors can be considered as a component on the plane of the substrate 11. Therefore, the strength of the earth magnetism on the plane of the substrate 11 is $B \times \cos \alpha$.

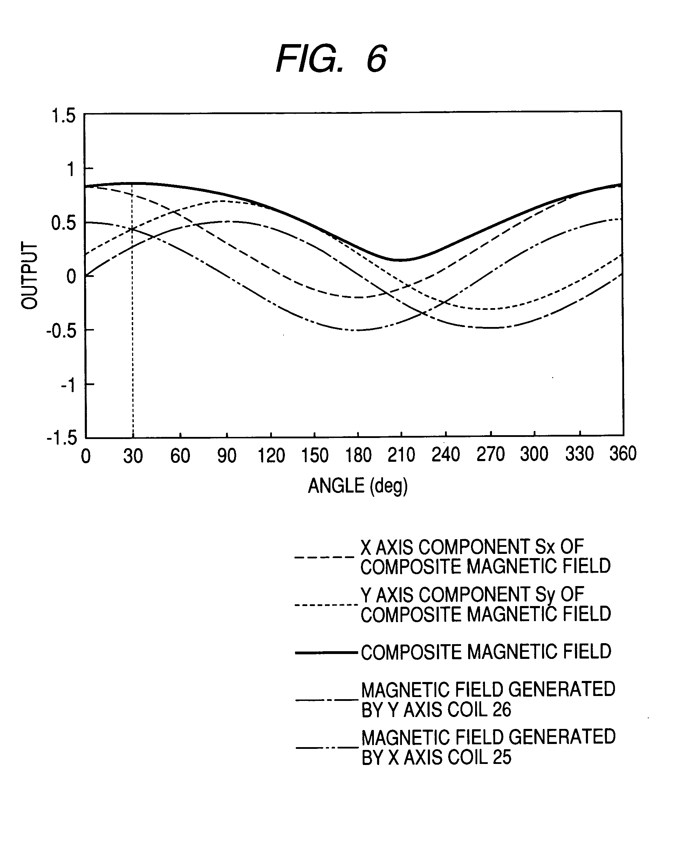

When the magnetic north is 30°, the magnetic dip is 30°, the strength A of the earth magnetism is 0.5, and the strength B of the rotating magnetic field is 0.5, the X axis magnetic sensor 21 and the Y axis magnetic sensor 22 detect the magnetic field whose amounts are as illustrated in Fig. 6 with respect to the direction of the vector of the rotating magnetic field.

The magnetic calculating device 15 performs the calculation of the equation (3) from the amounts of the detected magnetic field of the magnetic sensors. As a result, the values illustrated in Fig. 6 are obtained with respect to the direction of the vector of the rotating magnetic field.

The magnetic north calculating device 13 obtains the angle at which the strength of the composite magnetic field is maximal from the operation results to thus calculate 30° as the direction of the magnetic north.

According to the above-mentioned structure, the rotating magnetic field generating device 14 generates a rotating magnetic field having a uniform strength in the plane of the substrate 11. The two-axis sensor 12 and the magnetic north calculating device 13 calculate the angle at which the strength of the composite magnetic field is maximal to thus determine the direction of the magnetic north. When the substrate 11 is inclined by the magnetic dip a with respect to the horizontal plane, since the composite magnetic field between the rotating magnetic field and the plane component of the substrate 11 of the earth magnetism is detected, the maximum value of the strength of the composite magnetic field is reduced. However, it is possible to correctly determine the magnetic north. Therefore, it is possible to accurately detect the azimuth without being affected by the magnetic dip. Also, it is not necessary to perform correction of measuring the strength of the earth magnetism in accordance with the angle in a state where the magnetic compass is previously made horizontal. Therefore, it is possible to improve the operation property of the magnetic compass. Further, it is not necessary to use a special device for offsetting the effects from the magnetic dip. As a result, it is possible to simplify the structure of the magnetic compass to reduce the manufacturing cost.

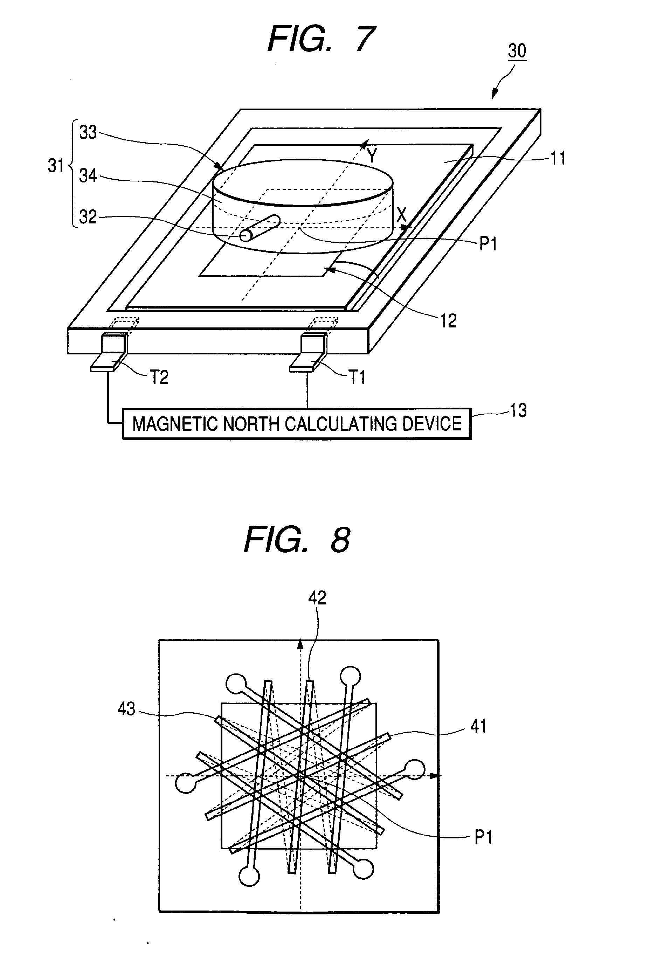

Next, a second embodiment will be described with reference to Fig. 7.

The basic structure of the second embodiment is the same as that of the above-described first embodiment, and the second embodiment is obtained by adding different components to the first embodiment. Therefore, in Fig. 7, the same members as those of Fig. 1 are denoted by the same reference numerals and description thereof will be omitted.

Difference between the second embodiment and the first embodiment lies in that, meanwhile the rotating magnetic field generating device 14 is composed of the X axis coil 25, the Y axis coil 26, and the magnetic field control circuit 27 according to the first embodiment, in a magnetic compass 30 according to the second embodiment, a rotating magnetic field generating device 31 includes a permanent magnet 32 whose magnetic poles are arranged from the reference point P1 toward a radial direction on the plane of the substrate 11 and a rotation driving portion 33 for rotating the permanent magnet 32 using the reference point P1 as the center of rotation.

The rotation driving portion 33 includes a rotary encoder 34 for detecting the angle of rotation of the permanent magnet 32.

The rotary encoder 34 is electrically connected to the magnetic north calculating device 13.

According to the above-mentioned structure, the rotation driving portion 33 rotates the permanent magnet 32 on the plane of the substrate 11 to thus generate a rotating magnetic field of a uniform strength using the reference point P1 as the center of rotation. Like in the above-described first embodiment, the angle at which the strength of the composite magnetic field between the rotating magnetic field and the earth magnetism is maximal is calculated as the direction of the magnetic north.

The present invention is not limited to the above embodiments and various changes in form and details may be made therein without departing from the spirit and scope of the present invention. For example, according to the first embodiment, the rotating magnetic field is generated by the respective coils arranged toward the X axis direction and the Y axis direction. However, the present invention is not limited to the above and the coils are preferably arranged so that a rotating magnetic field using the reference point as the center of rotation is generated. For example, as illustrated in Fig. 8, the rotating magnetic field may be generated by sequentially flowing electricity to three coils 41, 42, and 43 arranged so as to cross each other by 120° around the reference point P1.

Four coils are arranged so as to cross each other by 45° around the reference point P1. Magnetic fields having a uniform strength may be sequentially generated with respect to the four coils. Since two kinds of vector directions exist with respect to the generated magnetic field, the direction in which the strength of the composite magnetic field is maximal among the applied magnetic fields of eight directions is determined as the direction of the magnetic north, such that it is possible to easily control the applied magnetic fields. According to the first embodiment, a thin film coil is used as the rotating magnetic field generating device. However, a coil formed by winding a conductive line around the substrate 11 may be used as the rotating magnetic field generating device.

According to the above-described embodiment, a Hall element is used as the magnetic sensor. However, a flux gate, a GMR (giant magnetic reluctance) element, and an MI (magnetic impedance) element may be used as the magnetic sensors.

According to the above-described embodiment, the magnetic sensors are arranged on the substrate. However, a frame may be used instead of the substrate. The magnetic sensors may be built in the substrate or may be arranged on the other surface of the substrate.

As described-above, according to the magnetic compass of the present invention, it is possible to accurately calculate the direction of the magnetic north whether the magnetic sensors are arranged on the horizontal plane or not. Also, it is possible to measure the magnetic north without being affected by the magnetic dip so that it is not necessary to provide a special device for offsetting the effects from the magnetic dip, and to simplify the entire structure of the magnetic compass.

**Claims**

1.    A magnetic compass comprising:

a base material;
a plurality of magnetic sensors arranged on the base material, the magnetic sensors detecting external magnetic fields;
an azimuth measuring device for measuring the azimuth from the outputs of the magnetic sensors; and
a rotating magnetic field generating device for generating a rotating magnetic field on a plane having a reference point using the reference point separated from the plurality of magnetic sensors of the base material as a center of rotation.

2.    The magnetic compass according to claim 1,
wherein the base material is a substrate;
wherein the magnetic sensors are formed on one surface of the substrate, and
wherein the rotating magnetic field generating device generates a rotating magnetic field having a uniform strength along one surface of the substrate.

3.    The magnetic compass according to claim 1 or 2, wherein the rotating magnetic field generating device comprises a plurality of coils, and a magnetic field controlling portion for generating a phase difference with respect to the plurality of coils to generate a magnetic field.

4.    The magnetic compass according to claim 1 or 2, wherein the rotating magnetic field generating device comprises:

a permanent magnet whose magnetic poles are arranged from the reference point toward a radial direction on the plane having the reference point; and
a rotation driving portion for rotating the permanent magnet using the reference point as a center of rotation along the plane having the reference point.

# FIG. 1

# FIG. 2

# FIG. 3

X AXIS COMPONENT Sx OF
COMPOSITE MAGNETIC FIELD

Y AXIS COMPONENT Sy OF
COMPOSITE MAGNETIC FIELD

COMPOSITE MAGNETIC FIELD

MAGNETIC FIELD GENERATED
BY Y AXIS COIL 26

MAGNETIC FIELD GENERATED
BY X AXIS COIL 25

# FIG. 4

X AXIS COMPONENT Sx OF
COMPOSITE MAGNETIC FIELD

Y AXIS COMPONENT Sy OF
COMPOSITE MAGNETIC FIELD

COMPOSITE MAGNETIC FIELD

MAGNETIC FIELD GENERATED
BY Y AXIS COIL 26

MAGNETIC FIELD GENERATED
BY X AXIS COIL 25

# FIG. 5

X AXIS COMPONENT Sx OF
COMPOSITE MAGNETIC FIELD

Y AXIS COMPONENT Sy OF
COMPOSITE MAGNETIC FIELD

COMPOSITE MAGNETIC FIELD

MAGNETIC FIELD GENERATED
BY Y AXIS COIL 26

MAGNETIC FIELD GENERATED
BY X AXIS COIL 25

# FIG. 6

X AXIS COMPONENT Sx OF
COMPOSITE MAGNETIC FIELD

Y AXIS COMPONENT Sy OF
COMPOSITE MAGNETIC FIELD

COMPOSITE MAGNETIC FIELD

MAGNETIC FIELD GENERATED
BY Y AXIS COIL 26

MAGNETIC FIELD GENERATED
BY X AXIS COIL 25

# FIG. 7

MAGNETIC NORTH CALCULATING DEVICE

# FIG. 8